# FASCICULE DE BREVET EUROPEEN

(11) **EP 1 844 663 B1**
(45) Date de publication et mention de la délivrance du brevet: **09.06.2010**
(21) Numéro de dépôt: 07356048.4
(22) Date de dépôt: 13.04.2007
(51) Int. Cl.: A23L 1/00, A23L 1/01, A23L 1/48, A23L 3/00, B65B 55/00, A23L 3/015

(54) **Procédé de fabrication d'une préparation alimentaire hétérogène et complexe, fraîche, conditionnée**
Verfahren zur Herstellung einer heterogenen und komplexen Lebensmittelzubereitung, frisch, abgepackt
Method of manufacturing a food preparation that is heterogeneous and complex, fresh and packaged

(30) Priorité: 14.04.2006 FR 0603388
(43) Date de publication de la demande: 17.10.2007
(73) Titulaire: MARIE, 94150 Rungis (FR)
(72) Inventeur: Lebail, Alain, 44000 Nantes (FR); De Lamballerie, Marie, 44300 Nantes (FR); Vignolle, Marc, 86000 Poitiers (FR)
(74) Mandataire: Tripoz, Inès

(56) Documents cités:
- EP-A- 0 645 097
- EP-A- 1 053 944
- CH-A- 684 985
- FR-A- 2 607 674

## Description

La présente invention concerne la préparation et le conditionnement de plats cuisinés, et plus particulièrement de plats cuisinés frais hétérogènes dressés et stabilisés, c'est-à-dire dont les microorganismes contaminants ont été détruits.

Les produits et plats cuisinés frais, conditionnés, représentent une gamme de produits en plein essor.

Une des difficultés liée à la commercialisation de cette gamme, réside dans la possibilité de conservation et de restitution complète des qualités d'un produit qui est hétérogène, c'est-à-dire comportant par exemple du poisson et des légumes, mais également du riz et une sauce, tant en terme de couleur et texture, tout en ayant une durée de vie compatible avec les exigences des circuits de distribution.

Toutefois, cette restitution n'est pas possible ni avec les traitements thermiques classiques de pasteurisation, ni d'emballage, notamment à cause de l'oxydation par exemple des légumes ou des végétaux, le persil noircit, et des problèmes de texture, la tomate va éclater et s'écraser, et le poisson va être trop cuit en raison du traitement thermique.

L'ensemble des ces difficultés est un frein important à la commercialisation et conduit soit à une limitation importante des gammes et des recettes, soit à des solutions d'emballage et de conditionnement séparé des différents composants du plat.

Ces solutions entraînent non seulement une intervention du consommateur pour un dressage du plat e/ou de l'assiette, mais également une dégradation au niveau des propriétés organoleptiques.

Le problème à résoudre est ainsi la possibilité d'élaboration d'un plat cuisiné frais à un stade culinaire requis, de le conditionner après dressage dans une forme, prêt à être servi et de la stabiliser au niveau conservation sans dénaturation esthétique et organoleptique.

Un plat cuisiné, c'est-à-dire préparé pour la consommation comporte nécessairement des éléments hétérogènes à savoir des éléments de nature différente, c'est donc une préparation alimentaire hétérogène et complexe.

On entend par hétérogène, qui est composé d'éléments de nature différente.

On entend par complexe, qui contient ou qui réunit plusieurs éléments différents:

A cet égard, on peut mentionner différents documents de l'état de la technique.

Le brevet CH 684 985 décrit un procédé de préparation et de conservation de mets et de plats cuisinés, qui consiste, dans un premier temps, à introduire les aliments à l'état naturel dans un sachet plastique spécifique et à placer ledit sachet sous vide (950 mbar), puis à cuire ces aliments dans un four à la vapeur et, enfin après la cuisson, à abaisser très rapidement la température de ces produits. Ce procédé permet de cumuler la qualité gustative des produits avec une durée optimale de conservation.

La demande de brevet EP 0 645 097 A1 décrit un procédé de fabrication d'un aliment composite qui comprend les étapes de préparation de la pâte et de la farce, de disposition de ces deux produits dans un emballage spécifique, de fermeture de l'emballage sous vide et cuisson. Ce procédé permet de fabriquer un aliment susceptible d'être manipulé sans détérioration et ayant une longue durée de conservation. La pression exercée sur l'aliment est de l'ordre de 0,22 MPa.

La demande de brevet EP 1053 944 A1 décrit un procédé de conditionnement et un conditionnement pour la conservation et/ou la cuisson ou le réchauffage de produits alimentaires. Le conditionnement est un emballage hermétiquement clos comprenant un récipient fermé par un film plastique fixé par soudage thermique sur la périphérie dudit récipient.

La demande de brevet FR 2 607 674 A1 décrit un procédé de traitement de plats cuisinés emballés afin de leur assurer une longue durée de conservation. Ce procédé consiste à isoler les aliments de tout contact avec l'oxygène par scellage sous vide, à les pasteuriser, à les refroidir et à les exposer à un rayonnement ionisant.

Leur nature différente entraîne une résistance et un comportement différents vis-à-vis de la température, de la pression et du temps.

Le plat cuisiné est préparé pour la consommation c'est-à-dire qu'il est apprêté et présenté, cette présentation requiert un support de présentation, classiquement ce support est l'assiette ou le plat de service.

Lorsque des plats cuisinés sont commercialisés, emballés, c'est l'emballage qui devra servir de support de présentation et dans le cas présent permettre le dressage du plat tel qu'il devra être consommé.

Ce support outre qu'il sera adapté à la nature du plat, présence de sauce par exemple devra également servir de support durant le traitement permettant la stabilisation et durant le réchauffage.

La demanderesse a réussi à résoudre le problème en mettant au point un procédé de fabrication d'une préparation alimentaire hétérogène et complexe, fraîche, conditionnée, **caractérisé en ce qu**'il comprend les étapes de :
a) préparation assemblage et dressage de la préparation alimentaire sur un support faisant office d'emballage inférieur,
b) emballage de ladite préparation par recouvrement par drapage sous vide par un film flexible thermoplastique,
c) application d'au moins un cycle de traitement par Hautes Pressions (HP), à un palier d'une valeur comprise entre 300 et 800 MPa, pendant une durée comprise entre 1 et 10 minutes,
d) détente instantanée,
e) refroidissement.

Les plats cuisinés frais sont choisis parmi les plats de viande et de poisson avec sauce et accompagnement, les salades composées.

Le support faisant office d'emballage inférieur est choisi dans le groupe des emballages rigides ou semi-rigides, à savoir les barquettes, les assiettes, les plats.

Dans d'autres modes de réalisation le support faisant office d'emballage inférieur est constitué par un film souple de même nature ou de nature différente de celle du film supérieur.

Le film thermoplastique est choisi dans les films à base de polyoléfine, de polyester et/ou de nylon, seuls, en mélange ou sous forme de films composites.

Pendant l'étape c), la température est comprise entre 10 et 50°C, et, le cycle de traitement à une durée. Inférieure à 20 mn.

Dans un mode de réalisation la durée du traitement est inférieure à 10 mn, dans une autre mode elle est inférieure à 5 mn.

Dans un autre mode de réalisation elle pourra être égale à 3 mn.

La température peut également être comprise entre 30 et 35°C.

La pression est comprise entre 400 et 700 MPa

Dans un autre mode de réalisation la pression est comprise entre 550 et 650 MPa.

La température de l'eau de pressurisation s'élève en fonction de l'élévation de la pression.

A l'étape e) la préparation alimentaire hétérogène et complexe, fraîche, conditionnée est portée à une température inférieure à 10°C.

Dans un autre mode de réalisation, à cette même étape e) elle est portée à une température inférieure à 5 °C.

L'application des hautes pressions isostatiques conduit à la destruction à température ambiante des micro-organismes. Ce procédé est connu.

Cette application conduit à une « pasteurisation » par la pression à une température inférieure à 40°C ou « pascalisation ».

L'utilisation de la Haute Pression offre la possibilité de préserver les goûts, les teneurs en vitamines et sont utilisées par exemple pour la conservation des jus de fruits ou de produits de charcuterie.

Les effets des hautes pressions isostatiques sur les produits peuvent entraîner des modifications dans leur structure, conduisant par exemple à la gélification de certaines protéines ou à la modification de la couleur des viandes.

Ces effets différents entraînent une difficulté supplémentaire lorsque la présentation finale visée du produit est une présentation du plat dressé, c'est-à-dire une préparation hétérogène et complexe.

On entend par préparation alimentaire hétérogène et complexe des plats cuisinés tels que précédemment cités.

A titre d'illustration, les plats résultant d'assemblage, par exemple de poisson : cabillaud, saumon ; de volaille : poulet, canard ; de légumes : haricots verts, brocolis, petits pois ; de féculents : riz, pâtes, et de sauces : mayonnaise, vinaigrette pour les salades, sauce à la crème, à la moutarde, jus de rôti déglacé, etc. pour les viandes, de fruits : tomates, citrons.

Les différents composants de ces préparations hétérogènes et complexes n'ont pas tous un degré de cuisson identique, par exemple, la tomate ou la rondelle de citron ou le persil seront incorporés au moment du dressage après cuisson.

Le procédé permet ainsi la stabilisation de produits ayant subi un prétraitement différent.

Les viandes peuvent être cuites ou pochées, les poissons peuvent être traités crus marqués au grill ou cuits, les légumes pourront être soient blanchis, pochés ou cuits, les sauces pourront être crues ou cuites également.

Ces différences de prétraitement entraînent des différences de structure et de texture et elles sont et doivent être restituées après le traitement de stabilisation.

Par exemple les légumes entrant dans la composition d'une salade sont pochés et blanchis, et devront donc conserver une texture « croquante ».

Cette restitution n'est pas possible avec les traitements classiques par la chaleur par exemple.

Parmi les exemples ci-après, on citera les plats suivants :
- cabillaud sauce citron riz petits légumes,
- saumon rôti riz et légumes verts,
- aiguillettes de poulet barattées sauce moutarde,
- aiguillettes de poulet barattées et légumes verts,
- macédoine de légumes,
- salade piémontaise,
- salade crevettes avocats,
- salade alsacienne,
- salade niçoise.

Dans un mode de réalisation, l'étape de traitement par hautes pressions isostatiques est effectuée par passage dans une enceinte hyperbarique comportant un circuit haute pression, un système de compression dudit fluide (pompe extérieure ou piston dans l'enceinte), et d'un système de refroidissement et parfois de chauffage.

Des équipements hyperbares sont par exemple commercialisés par la société NC HYPERBARIC qui ont la particularité de présenter un « design » horizontal.

D'autres équipements susceptibles d'être mis en oeuvre sont par exemple commercialisés par les sociétés AVURE ou MITSUBISHI.

Par exemple on utilisera une enceinte d'un volume compris entre 50 et 300 I, en fonction des produits traités.

Les emballages comportent au moins un film flexible thermoplastique recouvrant par drapage sous vide la préparation alimentaire hétérogène et complexe.

Ladite préparation après sa phase d'élaboration est dressée dans ou sur un emballage dans un état prêt à servir.

Le dressage s'entend par la présentation complète du plat cuisiné, par exemple, mise en place des légumes de la viande ou du poisson, nappage avec la sauce et décoration avec le persil, la tomate et/ou la rondelle de citron.

Cette présentation est effectuée sur ou dans un emballage servant de support rigide ou semi-rigide qui permet de maintenir la présentation et pourra être manipulé aisément par le consommateur après réchauffage, par exemple plats de présentation pour deux portions, assiettes individuelles, petits saladiers, barquettes, bols, etc.....

Cet emballage servant de support et le plat cuisiné présenté ou dressé sur celui-ci sont ensuite recouverts par drapage sous vide par film flexible thermoplastique.

Le film thermoplastique flexible est éventuellement chauffé avant mise en dépression et application sous vide sur la préparation alimentaire hétérogène et complexe, en laissant un espace entre le film et la préparation alimentaire le plus faible possible donc sans présence d'air ou avec une très faible présence d'air, et est soudé ou collé sur la partie inférieure formant support de l'emballage à l'extérieur de la préparation alimentaire.

Le film est ainsi thermoformé autour de la préparation dressée et/ou présentée.

De tels emballages sont par exemple décrits dans FR 1 258 357 ou FR 1 286 018, et sont commercialisés par la société CRYOVAC.

L'absence d'air ou de gaz entre la partie supérieure de, la préparation alimentaire et l'emballage est doublement nécessaire, en effet c'est une condition de l'application homogène des hautes pressions isostatiques sur la préparation alimentaire hétérogène et complexe et de l'efficacité dudit traitement, mais également de la non déformation du produit.

C'est également une nécessité vis-à-vis de la conservation et de l'absence d'oxydation de ladite préparation.

Est également décrite l'utilisation d'un emballage comportant au moins un film flexible thermoplastique recouvrant par drapage sous vide une préparation alimentaire hétérogène et complexe fraîche pour le conditionnement de ladite préparation alimentaire soumise à un processus de stabilisation par un traitement par H.P.

L'emballage comprend en outre un support faisant office d'emballage inférieur choisi dans le groupe des emballages rigides ou semi-rigides, à savoir les barquettes, les assiettes, les plats.

Les plats cuisinés frais sont choisis parmi les plats de viande et de poisson avec sauce et accompagnement, les plats de légumes et les salades composées.

Le film thermoplastique est choisi dans les films à base de polyoléfine, de polyester et/ou de nylon, seuls, en mélange ou sous forme de films composites.

Le traitement par HP comporte au moins une phase de soumission à une pression comprise entre 300 et 800 MPa pendant une durée comprise entre 1 et 10 minutes.

Est également décrite la préparation alimentaire hétérogène et complexe, fraîche, conditionnée dans un emballage comportant au moins un film flexible thermoplastique la recouvrant par drapage sous vide, **caractérisée en ce qu**'elle a été soumise à un processus de pasteurisation par un traitement par H.P.

L'emballage de la préparation comprend en outre un support faisant office d'emballage inférieur choisi dans le groupe des emballages rigides ou semi-rigides, à savoir les barquettes, les assiettes, les plats.

Les plats cuisinés frais sont choisis parmi les plats de viande et de poisson avec sauce et accompagnement, les salades composées.

Le film thermoplastique est choisi dans les films à base de polyoléfine, de polyester et/ou de nylon, seuls, en mélange ou sous forme de films composites.

Le traitement par HP comporte au moins une phase de soumission à une pression comprise entre 300 et 800 MPa pendant une durée comprise entre 1 et 10 minutes.

Le procédé selon l'invention a ainsi, de façon surprenante, permit de résoudre le problème posé et d'obtenir des préparations alimentaires hétérogènes et complexes selon l'invention présentant des qualités visuelles, organoleptiques, de texture, ainsi qu'une qualité microbiologique jamais atteinte à ce jour pour des préparations hétérogènes et complexes comportant des viandes ou poissons, des légumes, des sauces et des féculents.

La présente invention est illustrée par les exemples suivants qui illustrent la conservation des qualités organoleptiques et les qualités microbiologiques.

### Exemple 1

Conservation des qualités organoleptiques.

L'ensemble des produits cités dans le tableau I ont été après emballage avec un film thermoplastique par drapage sur une assiette ont été soumis à une montée en pression à un palier de 600 MPa, maintien du palier pendant 3 minutes et détente instantanée.

**Tableau I**

| Produits | Prétraitements | Qualités organoleptiques |
|---|---|---|
| Cabillaud | Pochage vapeur Pochage eau Enrobage Rôtissage, poelage | Le poisson restitue une texture ferme, non cotonneuse. Les myotomes se séparent facilement. La couleur est blanche. |
| Saumon | Pochage vapeur ou eau Rôtissage, poelage, grillage | La texture est ferme .la couleur rosée vire au rose clair |
| Blanc de poulet | Saumurage, barattage Pochage vapeur, rôtissage | La texture est ferme mais reste juteuse. Le poulet se coupe bien avec les dents sans pour autant avoir une texture de gel. La couleur interne est un blanc homogène. |
| Haricots verts | Pochage vapeur ou eau + assaisonnement | Haricot légèrement croquant très bonne tenue, couleur verte préservée |
| Pâtes | Cuisson à l'eau | La texture est préservée selon la cuisson préalable :al dente ou fondante. |
| Salades composées | Pochage ou blanchiment des composants puis mélange avec une sauce (vinaigrette,..) | La texture des différents composants est identifiée, le goût est amélioré par l'absence de conservateur type acidifiant dans la sauce. |

### Exemple 2

Les plats cuisinés cités dans les tableaux II à VI ont été après emballage avec un film thermoplastique par drapage sur une assiette soumis à une montée en pression à un palier de 600 MPa, maintien du palier pendant 3 minutes et détente instantanée.

Le témoin est constitué par un plat n'ayant subi aucun traitement visant à améliorer sa conservation.

Les analyses ont été effectuées par un laboratoire extérieur agréé selon les normes en vigueur.

**Tableau II**

| Plats cuisinés à base de cabillaud sauce citron riz petits légumes Analyse réglementaire plats cuisinés Arrêté du 21/12/79 Stockage des produits à 4°C | | | | | |
|---|---|---|---|---|---|
| | Témoin | J + 14 | J + 28 | J + 42 | J + 66 |
| Flore aérobie mésophile (30°C) /g | 10 000 000 | < 10 000 | < 10 000 | < 10 000 | < 10 000 |
| Coliformes /g thermotolérants /g | < 10 | < 10 | < 10 | < 10 | < 10 |
| Coliformes totaux /g | < 1 000 | < 1 000 | < 1 000 | < 1 000 | < 1 000 |
| Salmonella /25 g | Absence | Absence | Absence | Absence | Absence |
| caogulase + /g | < 100 | < 100 | < 100 | < 100 | < 100 |
| Anaérobie sulfito-reducteurs /g | < 10 | < 10 | < 10 | < 10 | < 10 |

**Tableau III**

| Plats cuisinés à base de saumon rôti, riz et petits légumes verts Analyse réglementaire plats cuisinés Arrêté du 21/12/79 Stockage des produits à 4°C | | | | | |
|---|---|---|---|---|---|
| | Témoin | J + 14 | J + 28 | J + 42 | J + 66 |
| Flore aérobie /g mésophile (30°C) /g | 5 000 000 | < 10 000 | 100 000 | 210 000 | 80 000 |
| Coliformes thermotolérants /g | 130 | < 10 | < 10 | < 10 | < 10 |
| Coliformes totaux /g | 62 000 | < 1 000 | < 1 000 | < 1 000 | < 1 000 |
| Salmonella /25 g | Absence | Absence | Absence | Absence | Absence |
| Staphylocoques caogulase + /g | < 100 | < 100 | < 100 | < 100 | < 100 |
| Anaérobie sulfito-reducteurs /g | < 10 | < 10 | < 10 | < 10 | < 10 |

**Tableau VI**

| Plats cuisinés à base d'aiguillettes de poulet barattées sauce moutarde & farfalles Analyse réglementaire plats cuisinés Arêté du 21/12/79 Stockage des produits à 4°C | | | | | |
|---|---|---|---|---|---|
| | Témoin | J + 14 | J + 28 | J + 42 | J + 66 |
| Flore aérobie mésophile (30°C) /g | 1 500 000 | 98 000 | < 10 000 | < 10 000 | 30 000 |
| Coliformes thermotolérants /g | < 10 | < 10 | < 14 | < 10 | < 10 |
| Coliformes totaux /g | 14 000 | < 1 000 | < 1 000 | < 1 000 | < 1 000 |
| Salmonella /25 g | Absence | Absence | Absence | Absence | Absence |
| Staphylocoques caogulase + /g | < 100 | < 100 | < 100 | < 100 | < 100 |
| Anaérobie sulfito-reducteurs /g | < 10 | < 10 | < 10 | < 10 | < 10 |

**Tableau V**

| Plats cuisinés à base d'aiguillettes de poulet barattées & légumes verts Analyse réglementaire plats cuisinés Arrêté du 21/12/79 Stockage des produits à 4°C | | | | | |
|---|---|---|---|---|---|
| | Témoin | J + 14 | J + 28 | J + 42 | J + 66 |
| Flore aérobie mésophile (30°C) /g | > 5 000 000 | < 10 000 | < 10 000 | < 10 000 | 250 000 |
| Coliformes thermotolérants /g | < 10 | < 10 | < 10 | < 10 | < 10 |
| Coliformes totaux /g | 13 500 | < 1 000 | < 1 000 | < 1 000 | < 1 000 |
| Salmonella /25 g | Absence | Absence | Absence | Absence | Absence |
| caogulase + /g | < 100 | < 100 | < 100 | < 100 | < 100 |
| Anaérobie sulfito-reducteurs /g | < 10 | < 10 | < 10 | < 10 | < 10 |

**Tableau VI**

| Salades Analyse réglementaire plats cuisinés Arrêté du 21/12/79 Stockage des produits à 4°C | | | | | |
|---|---|---|---|---|---|
| | HP sans conservateurs ni acidifiants | | | | |
| | J + 1 | J + 14 | J + 28 | J + 42 | J + 50 |
| Flore aérobie /g mésophile (30°C) /g | 100 000 | < 1 000 | < 1 000 | < 1 000 | < 1 000 |
| Levures /g | < 10 | < 10 | < 10 | < 10 | < 10 |
| Bacteries lactiques /g | < 1 000 | < 1 000 | < 1 000 | < 1 000 | < 1 000 |

Ainsi, toutes les analyses montrent une conformité des produits au bout de 66 jours pour les plats cuisinée, et de 50 jours pour les salades.

## Revendications

1. Procédé de fabrication d'une préparation alimentaire hétérogène et complexe, fraîche, conditionnée, **caractérisé en ce qu'**il comprend les étapes de :
a) préparation assemblage et dressage de la préparation alimentaire sur un support faisant office d'emballage inférieur,
b) emballage de ladite préparation par recouvrement par drapage sous vide par un film flexible thermoplastique,
c) application d'au moins un cycle de traitement par hautes pressions, à un palier d'une valeur comprise entre 300 et 800 MPa, pendant une durée comprise entre 1 et 10 minutes,
d) détente instantanée,
e) refroidissement.

2. Procédé selon la revendication 1, **caractérisé en ce que** les plats cuisinés frais sont choisis parmi les plats de viande et de poisson avec sauce et accompagnement, les salades composées.

3. Procédé selon l'une quelconque des revendications 1 à 2, **caractérisé en ce que** le support faisant office d'emballage inférieur est choisi dans le groupe des emballages rigides ou semi-rigides, à savoir les barquettes, les assiettes, les plats.

4. Procédé selon l'une quelconque des revendications 1 à 3, **caractérisé en ce que** le film thermoplastique est choisi dans les films à base de polyoléfine, de polyester et/ou de nylon, seuls, en mélange ou sous forme de films composites.

5. Procédé selon l'une quelconque des revendications 1 à 4, **caractérisé en ce que** pendant l'étape c), la température est comprise entre 10 et 50°C.

6. Procédé selon l'une quelconque des revendications 1 à 5, **caractérisé en ce que** pendant l'étape c), la température est comprise entre 30 et 35°C.

7. Procédé selon l'une quelconque des revendications 1 à 6, **caractérisé en ce que** pendant l'étape c), la pression est comprise entre 400 et 700 MPa.

8. Procédé selon l'une quelconque des revendications 1 à 7, **caractérisé en ce que** pendant l'étape c), le cycle de traitement a une durée de 3 minutes.

9. Procédé selon l'une quelconque des revendications 1 à 8, **caractérisé en ce que** pendant l'étape c), la préparation alimentaire hétérogène et complexe, fraîche, conditionnée est portée à une température inférieure à 5°C.

## Claims

1. Process for the manufacture of a packaged, fresh, heterogeneous and complex food preparation, **characterized in that** it comprises the steps of:
a) preparation, assembly and arrangement of the food preparation on a support acting as lower packaging,
b) packaging of said preparation by covering by vacuum-draping with a thermoplastic flexible film,
c) application of at least one cycle of HP treatment comprising a step with a value of between 300 and 800 MPa, for a period of between 1 and 10 minutes,
d) instantaneous pressure reduction,
e) cooling.

2. Process as claimed in claim 1, **characterized in that** the fresh ready-made meals are chosen from meat and fish meals with sauce and accompaniment, and mixed salads.

3. Process as claimed in one of claims 1 to 2, **characterized in that** the support acting as lower packaging is chosen from the group of rigid or semirigid packagings, namely trays, plates and dishes.

4. Process as claimed in one of claims 1 to 3, **characterized in that** the thermoplastic film is chosen from films based on polyolefin, polyester and/or nylon, alone, as a mixture or in the form of composite films.

5. Process as claimed in one of claims 1 to 4, **characterized in that,** during step c), the temperature is between 10 and 50°C.

6. Process as claimed in one of claims 1 to 5, **characterized in that,** during step c), the temperature is between 30 and 35°C.

7. Process as claimed in one of claims 1 to 6, **characterized in that,** during step c), the pressure is between 400 and 700 MPa.

8. Process as claimed in one of claims 1 to 7, **characterized in that,** during step c), the treatment cycle lasts 3 minutes.

9. Process as claimed in one of claims 1 to 8, **characterized in that,** during step c), the packaged, fresh, heterogeneous and complex food preparation is brought to a temperature of less than 5°C.

## Patentansprüche

1. Verfahren zur Herstellung einer verpackten, frischen, heterogenen und komplexen Lebensmittelzubereitung, **dadurch gekennzeichnet, dass** es die folgenden Schritte enthält:
a) Zubereitung, Zusammenstellung und Anrichten der Lebensmittelzubereitung auf einem Träger, der als untere Verpackung dient,
b) Verpacken der Zubereitung durch Bedecken mittels Vakuum-Schrumpfverpackung mit einer thermoplastischen flexiblen Folie,
c) Anwenden mindestens eines Hockdruck-Verarbeitungszyklus auf einer Stufe eines Werts zwischen 300 und 800 MPa, während einer Dauer zwischen 1 und 10 Minuten,
d) augenblickliche Druckminderung,
e) Abkühlung.

2. Verfahren nach Anspruch 1, **dadurch gekennzeichnet, dass** die frischen zubereiteten Gerichte aus den Fleisch- und Fischgerichten mit Sauce und Beilagen, den gemischten Salaten ausgewählt werden.

3. Verfahren nach einem der Ansprüche 1 bis 2, **dadurch gekennzeichnet, dass** der als untere Verpackung dienende Träger aus der Gruppe der steifen oder halbsteifen Verpackungen ausgewählt wird, d.h. den Schalen, den Tellern, den Schüsseln.

4. Verfahren nach einem der Ansprüche 1 bis 3, **dadurch gekennzeichnet, dass** die thermoplastische Folie unter den Folien auf der Basis von Polyolefin, Polyester und/oder Nylon alleine, gemischt oder in Form von Verbundfolien ausgewählt wird.

5. Verfahren nach einem der Ansprüche 1 bis 4, **dadurch gekennzeichnet, dass** während des Schritts c) die Temperatur zwischen 10 und 50°C liegt.

6. Verfahren nach einem der Ansprüche 1 bis 5, **dadurch gekennzeichnet, dass** während des Schritts c) die Temperatur zwischen 30 und 35°C liegt.

7. Verfahren nach einem der Ansprüche 1 bis 6, **dadurch gekennzeichnet, dass** während des Schritts c) der Druck zwischen 400 und 700 MPa liegt.

8. Verfahren nach einem der Ansprüche 1 bis 7, **dadurch gekennzeichnet, dass** während des Schritts c) der Verarbeitungszyklus eine Dauer von 3 Minuten hat.

9. Verfahren nach einem der Ansprüche 1 bis 8, **dadurch gekennzeichnet, dass** während des Schritts c) die verpackte, frische, heterogene und komplexe Lebensmittelzubereitung auf eine Temperatur unter 5°C gebracht wird.
